# FASCICULE DE BREVET EUROPEEN

(11) **EP 3 682 594 B1**
(45) Date de publication et mention de la délivrance du brevet: **18.05.2022**
(21) Numéro de dépôt: 18773241.7
(22) Date de dépôt: 31.08.2018
(51) Int. Cl.: H04L 12/12, H04B 10/40

(54) **SYSTEME DE GESTION D'UN RESEAU ETHERNET SUR FIBRE OPTIQUE D'UN VEHICULE**
SYSTEM ZUR VERWALTUNG EINES FASEROPTISCHEN ETHERNETNETZWERKS EINES FAHRZEUGS
SYSTEM FOR MANAGING A FIBRE-OPTIC ETHERNET NETWORK OF A VEHICLE

(30) Priorité: 14.09.2017 FR 1758544
(43) Date de publication de la demande: 22.07.2020
(73) Titulaire: PSA Automobiles SA, 78300 Poissy (FR)
(72) Inventeur: HARRAR, Ahmed, 95100 Argenteuil (FR); GONCALVES, Doarte, 92500 Rueil Malmaison (FR)
(86) Numéro de dépôt international: PCT/FR2018/052136
(87) Numéro de publication internationale: WO 2019/053352

(56) Documents cités:
- WO-A1-2010/070218
- FR-A1- 3 031 856
- US-A1- 2015 205 339

## Description

L'invention concerne, de façon générale, le domaine des réseaux de communication embarqués dans un véhicule. L'invention vise en particulier un système de gestion d'un réseau Ethernet sur fibre optique de véhicule automobile.

De manière générale, un véhicule automobile comprend une pluralité de calculateurs embarqués permettant la commande des différentes fonctions du véhicule, telles que les commandes d'allumage du moteur, les commandes sécuritaires, comme les airbags ou les feux de signalisation par exemple, ou bien encore les commandes de confort accessibles depuis l'habitacle du véhicule, comme le chauffage ou la fermeture et l'ouverture des vitres par exemple.

De manière connue, chaque calculateur embarqué, dédié à un ensemble de fonctions (fonctions du moteur, fonctions de sécurité ou fonctions de confort dans l'exemple cité ci-dessus), est relié à un calculateur désigné « calculateur maître », configuré pour commander chacun des autres calculateurs embarqués, désignés « calculateurs esclaves ».

Pour ce faire, le calculateur maître communique avec l'ensemble des calculateurs esclaves via un réseau de communication local, désigné réseau Ethernet. Un tel réseau de communication relie ainsi le calculateur maître à une pluralité de calculateurs esclaves, tous les calculateurs du véhicule étant reliés les uns aux autres de manière à permettre la coordination des actions de chacun.

De manière connue, un tel réseau de calculateurs est contrôlé pour être mis dans un état « de veille » ou un état « éveillé » selon les besoins du véhicule ou du conducteur, de manière à permettre une économie d'énergie du véhicule par exemple. De tels passages dans un état de veille ou d'éveil doivent être synchronisés entre tous les calculateurs du réseau afin de limiter les pertes de données.

A ce titre, il est connu un système de gestion d'un réseau Ethernet d'un véhicule automobile, permettant le réveil et la mise en veille du réseau. Un tel système comprend un calculateur principal connecté au réseau Ethernet via une paire de câbles torsadés de type câbles 100Base-T1, communément désignés câbles Ethernet. Le calculateur principal est configuré pour gérer le réveil et la mise en veille de calculateurs secondaires via une liaison filaire reliant l'ensemble des calculateurs. Cependant de nos jours, les câbles Ethernet sont de plus en plus remplacés par des câbles de type 100Base-TX en fibre optique, moins sujet aux perturbations. De manière connue, la communication par fibre optique se présente sous la forme d'un signal lumineux configuré pour se déplacer le long d'une telle fibre. On parle dans ce cas communément d'un réseau Ethernet sur fibre optique.

Pour de tels réseaux Ethernet sur fibre optique intégrés à un véhicule, l'état de la technique ne propose pas de système permettant la gestion du réseau, comme la mise en veille ou le réveil de l'ensemble des calculateurs du réseau par exemple.

En effet il est connu dans le document FR 3031856, un commutateur Ethernet pour un réseau sur fibre optique comprenant un émetteur, configuré pour transmettre un signal lumineux par un câble en fibre optique, et un récepteur, configuré pour recevoir un tel signal lumineux et le convertir en un signal électrique. Le commutateur décrit dans le document FR 3031856 comprend en outre un circuit d'alimentation et un circuit de réveil configuré pour générer un signal de réveil électrique à la réception du signal lumineux. Un tel circuit de réveil est connecté au circuit d'alimentation, permettant d'amorcer l'allumage d'un tel émetteur.

Cependant un tel commutateur n'est pas applicable à un réseau Ethernet sur fibre optique de véhicule automobile, ce qui présente un inconvénient majeur. On connaît aussi par le document WO 2010070218 un système de gestion du réveil et de l'endormissements de calculateurs connectés à un réseau CAN secondaire de véhicule automobile, le réseau CAN secondaire étant connecté à un réseau CAN principal au moyen d'une passerelle.

L'invention vise donc à pallier au moins en partie ces inconvénients en proposant un système simple et efficace permettant la gestion de l'état d'un réseau de communication d'un véhicule de type Ethernet sur fibre optique.

Plus précisément, pour parvenir à ce résultat, la présente invention concerne un système de gestion d'un réseau de communication multiplexé d'un véhicule, selon la revendication 1 et le procédé correspondant selon la revendication 6. Les revendications dépendantes représentent des modes de réalisation de l'invention.

Un tel système de gestion permet avantageusement de commander la mise en veille et le réveil d'un réseau de communication Ethernet sur fibre optique, permettant ainsi une économie d'énergie des systèmes du véhicule. Grâce à un tel système de gestion, l'état d'un tel réseau de communication Ethernet sur fibre optique peut être commandé à partir de messages reçus par l'un des calculateurs via la liaison filaire bidirectionnelle.

L'invention concerne également un véhicule automobile comprenant un réseau de communication Ethernet sur fibre optique et un système de gestion d'un état dudit réseau de communication selon la revendication 5.

D'autres caractéristiques et avantages de l'invention apparaîtront à la lecture de la description détaillée des formes de réalisation de l'invention, données à titre d'exemple uniquement, et en référence aux dessins qui montrent :
- la figure 1, une représentation schématique d'une forme de réalisation d'un système de gestion selon l'invention,
- la figure 2, une représentation schématique d'un signal de réveil émis par un calculateur maître du système de gestion de la figure 1,
- la figure 3, une représentation schématique d'un signal de réveil émis par un calculateur esclave du système de gestion de la figure 1,
- la figure 4, une représentation schématique d'un signal de mise en veille émis par un calculateur maître du système de la figure 1,
- La figure 5, un schéma bloc d'un mode de réalisation d'un procédé de gestion selon l'invention comprenant une phase de réveil, dans laquelle une demande de réveil est émise par un calculateur maître, et
- La figure 6, un schéma bloc d'un mode de réalisation d'un procédé de gestion selon l'invention comprenant une phase de réveil, dans laquelle une demande de réveil est émise par un calculateur esclave.

Dans ce qui va suivre, les formes de réalisation décrites s'attachent plus particulièrement à l'installation d'un système de gestion d'un réseau de communication selon l'invention au sein d'un véhicule automobile. Cependant, toute installation dans un contexte différent, en particulier dans tout type de véhicule, est également visée par la présente invention.

Comme cela est connu, un véhicule automobile comprend une pluralité de calculateurs embarqués, désignés calculateurs esclaves 20, permettant, lorsqu'ils sont activés, d'actionner une commande du véhicule. L'actionnement d'une commande est réalisé par exemple par l'émission d'un message, reçu par l'équipement concerné par la commande.

Pour ce faire, de tels calculateurs esclaves 20 sont reliés à un calculateur maître 10 via un réseau W multiplexé de communication. Un tel calculateur maître 10 est ainsi configuré pour commander chacun des calculateurs esclaves 20.

Le réseau W de communication décrit dans cette invention est un réseau de type Ethernet sur fibre optique, présentant l'avantage d'être un réseau local à très haut débit de transfert de données, permettant de limiter les perturbations.

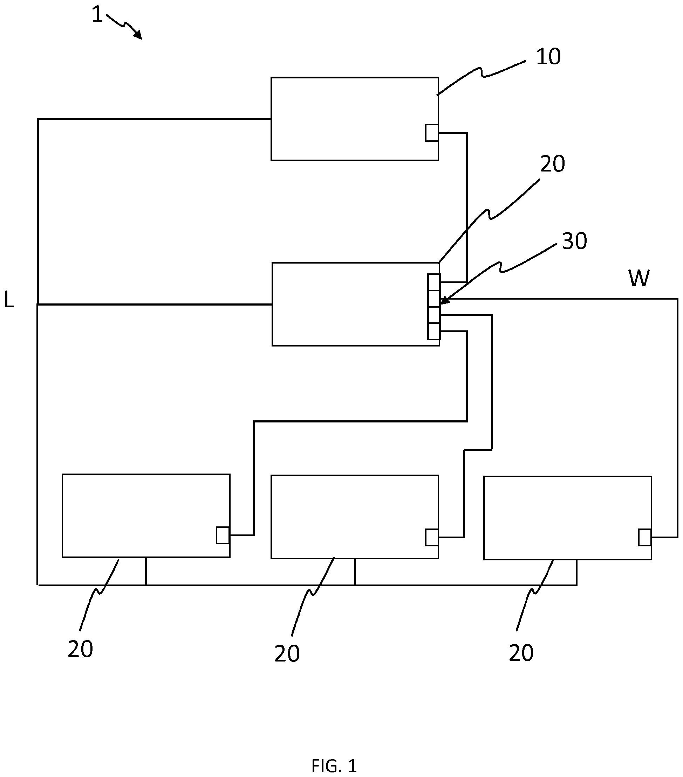

En référence à la figure 1, un véhicule automobile (non représenté) comprend un système de gestion 1 selon l'invention. Un tel système de gestion 1 comprend ainsi un calculateur maître 10, une pluralité de calculateurs esclaves 20 et un réseau W de communication multiplexé Ethernet sur fibre optique reliant lesdits calculateurs 10, 20 entre eux. Selon une forme de réalisation préférée de l'invention, le réseau W de communication Ethernet sur fibre optique comprend en outre une liaison filaire bidirectionnelle L additionnelle reliant chaque calculateur maître 10 et esclave 20 du réseau W.

Le calculateur maître 10 est configuré pour transmettre un message via le réseau W Ethernet sur fibre optique, permettant de gérer l'état d'un tel réseau W. Autrement dit, le calculateur maître 10 est configuré pour commander chaque calculateur esclave 20 afin de les placer dans un état précis. Une telle gestion du réseau W permet avantageusement de n'utiliser les calculateurs 10, 20 reliés au réseau W que lorsque ceci est nécessaire.

Dans cet exemple, le système de gestion 1 comprend quatre calculateurs esclaves 20, chacun dédié à une fonction précise du véhicule. Cependant il va de soi que le système de gestion 1 pourrait en comprendre un nombre différent, notamment un unique calculateur esclave 20 ou au moins deux calculateurs esclaves 20.

Dans la suite de ce document, le réseau W de communication reliant les calculateurs 10, 20 entre eux, on entend par les termes « réveil/mise en veille du réseau W de communication », le réveil ou la mise en veille de l'ensemble des calculateurs 10, 20 reliés par un tel réseau W de communication.

Chaque calculateur 10, 20 du système de gestion 1 est configuré pour envoyer et recevoir des messages relatifs à l'état du réseau W de communication via la liaison filaire bidirectionnelle L. De tels messages correspondent à des changements d'état a0, a1 d'un signal S1, S2, S3, S4, S5 généré via une telle liaison filaire bidirectionnelle L. Le calculateur maître 10 et les calculateurs esclaves 20 sont en outre configurés respectivement pour envoyer et recevoir un message de confirmation relatif à l'état du réseau W de communication via ledit réseau W de communication.

Dans cet exemple, chaque calculateur 10, 20 est ainsi configuré pour commander le réveil du réseau W, dans le but de placer ce dernier dans un état « éveillé ». Aussi chaque calculateur 10, 20 est configuré pour envoyer un message de réveil via la liaison filaire bidirectionnelle L. De plus, le calculateur maître 10 est en outre configuré pour commander la mise en veille du réseau W, dans le but de placer ce dernier dans un état « de veille ».

Lorsque le message de demande de réveil est envoyé par un calculateur esclave 20, à la réception d'un tel message de réveil, le calculateur maître 10 est également configuré pour se réveiller et envoyer un message de confirmation du réveil à l'ensemble des calculateurs esclaves 20 via le réseau W de communication. En outre, à la réception d'un tel message de réveil, envoyé par l'un des calculateurs esclaves 20, chaque calculateur esclave 20 est configuré pour se réveiller et attendre le message de confirmation transmis par le calculateur maître 10.

Chaque calculateur esclave 20 est ainsi relié au calculateur maître 10 afin que ledit calculateur maître 10 commande l'état des calculateurs esclaves 20. Aussi afin de connecter chaque calculateur maître 10 et esclave 20 au réseau W de communication, l'un des calculateurs 10, 20, comprend un commutateur 30 (représenté sur la figure 1), également désigné « switch » en langue anglaise. Tous les calculateurs 10, 20 sont connectés à un tel commutateur 30 afin d'être reliés entre eux par le réseau W de communication.

Dans l'exemple illustré à la figure 1, un premier calculateur esclave 20 comprend un tel commutateur 30, cependant il va de soi que le calculateur maître 10 pourrait, de manière alternative, comprendre le commutateur 30.

La liaison filaire bidirectionnelle L, configurée pour relier chaque calculateur 10, 20 à tous les autres calculateurs 10, 20 du système de gestion 1, permet aux calculateurs maître 10 et esclaves 20 d'activer le réveil (ou la mise en veille) du réseau W de communication.

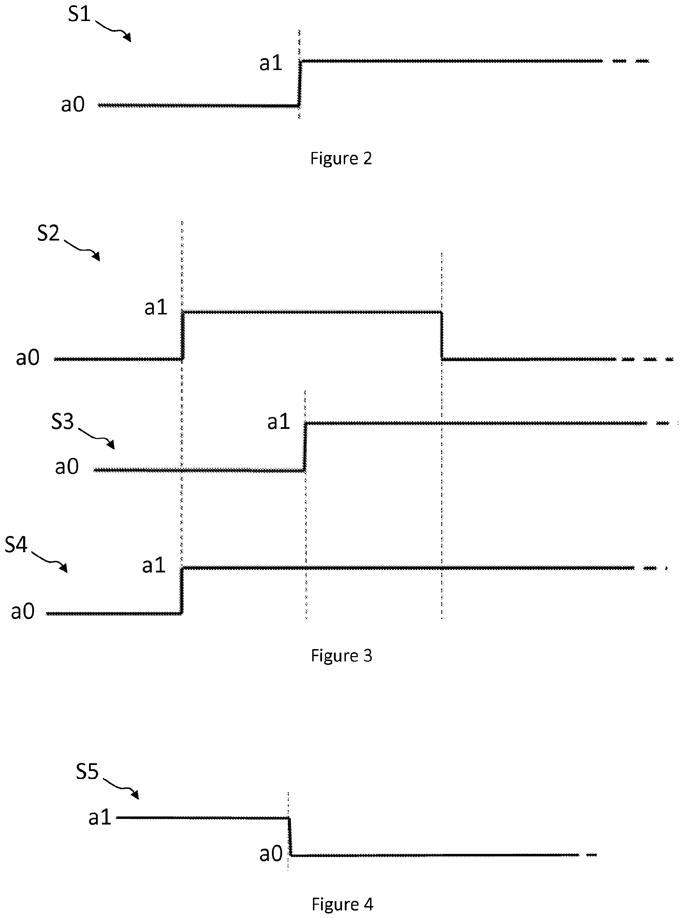

Pour ce faire, en référence aux figures 2 à 4, chaque calculateur 10, 20 est configuré pour générer un signal électrique S1, S2, S3, S4, S5 sur la liaison filaire bidirectionnelle L. De tels signaux S1, S2, S3, S4, S5 comprennent un état haut a1, correspondant à l'activation de la liaison filaire bidirectionnelle L, et un état bas a0, correspondant à la désactivation de la liaison filaire bidirectionnelle L. Chaque état a0, a1 est ainsi associé à un état du réseau W de communication.

Dans cet exemple, l'état haut a1 de la liaison filaire bidirectionnelle L est associé à l'état éveillé du réseau W et l'état bas a0 de la liaison filaire bidirectionnelle L est associé à l'état de mise en veille du réseau W. Il va de soi que l'association des états a0, a1 pourrait être inversée.

Le signal S1, illustré sur la figure 2, représente l'activation par le calculateur maître 10 de la liaison filaire bidirectionnelle L dans le cas de la commande de réveil du réseau W de communication par le calculateur maître 10.

Le signal S2, illustré sur la figure 3, représente l'activation de la liaison filaire bidirectionnelle L par un calculateur esclave 20. Cette activation entraîne le maintien par le calculateur maître 10 de l'activation de la liaison filaire directionnelle L représentée par le signal S3 tant que le réseau W de communication est éveillé. Le signal s4 représente la résultante des signaux électriques S2 et S3 sur la liaison filaire bidirectionnelle L.

Le signal S5, illustré sur la figure 4, représente la désactivation de la liaison filaire bidirectionnelle L par le calculateur maître 10 afin de commander la mise en veille du réseau W de communication.

Grâce au système de gestion 1 selon l'invention, le réveil et la mise en veille des calculateurs 10, 20, et donc du réseau W de communication, peuvent être commandés via la liaison filaire bidirectionnelle L. De plus, une telle liaison filaire L étant bidirectionnelle, chaque calculateur 10, 20 peut commander le réveil des autres calculateurs 10, 20, et donc du réseau W de communication, comme cela sera décrit par la suite. De même, le calculateur maître 10 peut également commander la mise en veille des calculateurs esclaves 20, et donc du réseau W de communication, permettant par exemple une économie d'énergie des systèmes du véhicule.

Il va dorénavant être présenté un procédé de gestion de l'état du réseau W de communication Ethernet sur fibre optique selon l'invention, selon un mode de réalisation préféré de l'invention. En référence aux figures 2 à 6, un tel réseau W comprend un calculateur maître 10 et une pluralité de calculateurs esclaves 20. Dans cet exemple, le procédé de gestion présente une phase de réveil et une phase de mise en veille.

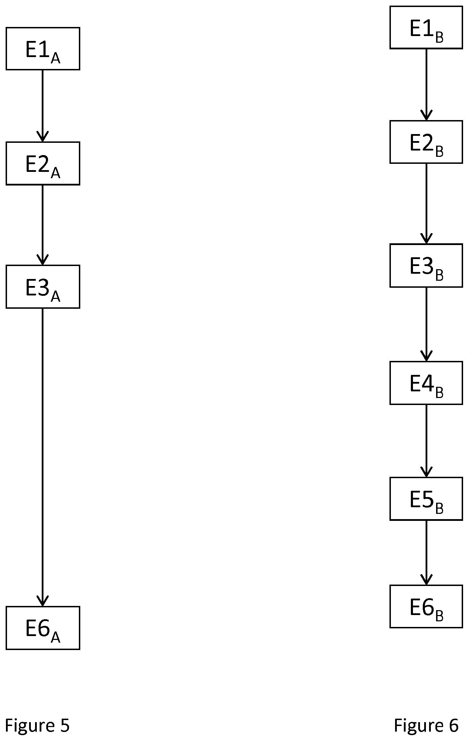

La figure 2 illustre, en phase de réveil, le réveil du réseau W de communication commandé par le calculateur maître 10, comme décrit précédemment, la figure 5 décrivant un procédé de gestion du réveil du réseau W demandé par le calculateur maître 10. Dans ce cas, le calculateur maître 10 est réveillé localement et active, dans une étape E1_{A}, la liaison filaire bidirectionnelle L, permettant l'envoi d'un message de réveil dans une étape E2_{A}. Dans ce but, le signal S1 émis par le calculateur maître 10 sur la liaison filaire bidirectionnelle L passe alors, dans cette étape E1_{A}, de l'état bas a0 à l'état haut a1.

Les calculateurs esclaves 20 détectent le changement d'état a0, a1 de la liaison filaire bidirectionnelle L. Les calculateurs esclaves 20 reçoivent donc le message de réveil, dans une étape E3_{A}, et se réveillent, dans une étape E6_{A}, entraînant le réveil du réseau W de communication, qui reste éveillé.

De manière alternative, dans cette phase de réveil, le réveil du réseau W peut être demandé par un premier calculateur esclave 20, comme illustré à la figure 3 et dont le procédé est représenté sur la figure 6. Dans ce cas, un tel premier calculateur esclave 20 est réveillé localement et active, dans une étape E1_{B}, la liaison filaire bidirectionnelle L, permettant l'envoi d'un message de réveil, dans une étape E2_{B}. Dans ce but, le signal S2 émis par le premier calculateur esclave 20 sur la liaison filaire bidirectionnelle L passe de l'état bas a0 à l'état haut a1.

Le calculateur maître 10 et les autres calculateurs esclaves 20 détectent alors le changement d'état a0, a1 de la liaison filaire bidirectionnelle L. L'ensemble des calculateurs 10, 20 reçoivent donc le message de réveil, dans une étape E3_{B}, et attendent alors un message de confirmation du réveil.

Le calculateur maître 10 envoie ensuite, dans une étape E4_{B}, un message de confirmation du réveil, reçu par l'ensemble des calculateurs esclaves 20, dans une étape E5_{B}. La réception d'un tel message entraîne le réveil de l'ensemble des calculateurs 10, 20 du réseau W, dans une étape E6_{B}. Pour ce faire, le signal S3 passe de l'état bas a0 à l'état haut a1 afin de maintenir le réseau W de communication éveillé. L'état du signal S3 est maintenu tant que le réseau W est éveillé. Ainsi, la résultante des signaux S2 et S3 est le signal S4 dont le changement d'état est détecté par tous les calculateurs 10, 20.

De manière avantageuse, le maintien à l'état haut a1 par le calculateur maître 10 du signal S4 transmis sur la liaison filaire bidirectionnelle L, les calculateurs 10, 20 sont maintenus éveillés même en cas de perte du réseau W de communication.

Dans une phase de mise en veille, le calculateur maître 10 peut en outre commander la mise en veille du réseau W de communication, comme cela est illustré à la figure 4. Dans ce cas, le calculateur maître 10, initialement réveillé, envoie un message de mise en veille et génère ainsi le signal S5 sur la liaison filaire bidirectionnelle L qui passe de l'état haut a1 à l'état bas a0.

Les calculateurs esclaves 20 détectent le changement d'état a0 du signal S5 via la liaison filaire bidirectionnelle L et reçoivent le message de mise en veille via le réseau W de communication. Les calculateurs esclaves 20 se mettent alors en veille, ce qui a pour effet la mise en veille le réseau W de communication.

Un tel système de gestion 1 permet avantageusement de commander, via une liaison filaire bidirectionnelle L, le réseau W de communication Ethernet sur fibre optique équipant un véhicule, permettant ainsi une mise en veille d'un tel réseau W, lorsque cela est possible, permettant une économie d'énergie par exemple. Un tel réseau W peut également avantageusement être réveillé soit par le calculateur maître 10, soit par le calculateur esclave 20, puisque la liaison filaire L suivant l'invention équipant le réseau est avantageusement bidirectionnelle.

## Revendications

1. Système de gestion (1) d'un réseau (W) de communication multiplexé d'un véhicule, ledit système de gestion (1) comprenant une pluralité de calculateurs (10, 20) reliés audit réseau (W) de communication, et une liaison filaire bidirectionnelle (L) reliant ladite pluralité de calculateurs (10, 20) entre eux, ledit réseau (W) de communication et ladite pluralité de calculateurs (10, 20) présentant un état de veille et un état éveillé, ladite pluralité de calculateurs (10, 20) comprenant un calculateur maître (10) et au moins un calculateur esclave (20), ledit calculateur maître (10) et ledit au moins un calculateur esclave (20) étant configurés pour émettre et recevoir un message relatif à un état demandé du réseau (W) de communication via ladite liaison filaire bidirectionnelle (L), l'état d'au moins un de la pluralité de calculateurs (10, 20) étant commandé à partir dudit message relatif à l'état demandé, de manière à commander l'état du réseau (W) de communication, ledit réseau (W) de communication étant de type Ethernet sur fibre optique, dans lequel ledit calculateur maître (10) et ledit au moins un calculateur esclave (20) sont respectivement configurés pour émettre et recevoir, via le réseau (W) de communication, un message de confirmation relatif audit état demandé.

2. Système de gestion (1) selon la revendication précédente, dans lequel ledit message relatif audit état du réseau (W) de communication correspond à un changement d'état (a0, a1) d'un signal (S1, S2, S3, S4, S5) émis par le calculateur maître (10) et/ou par ledit au moins un calculateur esclave (20) via la liaison filaire bidirectionnelle (L).

3. Système de gestion (1) selon la revendication précédente, dans lequel, ledit signal (S1, S2, S3, S4, S5) émis présentant un état haut (a1) et un état bas (a0), ledit état haut (a1) ou ledit état bas (a0) du signal (S1, S2, S3, S4, S5) correspond à l'état éveillé du réseau (W) de communication et l'autre dudit état haut (a1) ou dudit état bas (a0) du signal correspond à l'état de veille du réseau (W) de communication.

4. Système de gestion (1) selon l'une des revendications précédentes, comprenant un premier calculateur esclave (20) et au moins un deuxième calculateur esclave (20), ledit au moins un deuxième calculateur esclave (20) étant relié au calculateur maître (10) et audit premier calculateur esclave (20) par une liaison filaire bidirectionnelle (L), au moins un du calculateur maître (10) ou du premier calculateur esclave (20) comprend un commutateur (30) configuré pour relier ledit au moins un deuxième calculateur esclave (20) au réseau (W) de communication.

5. Véhicule automobile comprenant un réseau (W) de communication Ethernet sur fibre optique et un système de gestion (1) d'un état dudit réseau (W) de communication selon l'une des revendications 1 à 4.

6. Procédé de gestion d'un réseau (W) de communication multiplexé d'un véhicule, ledit véhicule comprenant un système de gestion (1) dudit réseau (W) de communication présentant un état de veille et un état éveillé, ledit système de gestion (1) comprenant un calculateur maître (10) et au moins un premier calculateur esclave (20), ledit réseau (W) de communication étant de type Ethernet sur fibre optique, ledit procédé comprenant une phase de réveil dudit réseau (W) de communication comprenant :
- une étape (E1_{A}, E1_{B}) d'activation de ladite liaison filaire bidirectionnelle (L),
- une étape (E2_{A}, E2_{B}) d'envoi par ledit calculateur maître (10) ou par ledit premier calculateur esclave (20) d'un message de réveil du réseau (W) de communication via la liaison filaire bidirectionnelle (L),
- une étape (E3_{A}, E3_{B}) de réception par l'autre dudit calculateur maître (10) ou dudit premier calculateur esclave (20) dudit message de réveil, et
- une étape (E6_{A}, E6_{B}) de réveil dudit calculateur maître (10) et dudit premier calculateur esclave (20), entrainant le réveil du réseau (W) de communication,
ladite étape (E2_{A}, E2_{B}) d'envoi d'un message de réveil du réseau (W) de communication étant réalisée par le premier calculateur esclave (20), le procédé comprend, après l'étape (E3_{A}, E3_{B}) de réception par le calculateur maître (10) dudit message de réveil, une étape (E4_{B}) d'envoi par le calculateur maître (10) audit au moins un premier calculateur esclave (20) d'un message de confirmation du réveil du réseau (W) de communication via le réseau (W) de communication.

7. Procédé de gestion selon la revendication précédente, comprenant une étape (E5_{B}) de réception par le premier calculateur esclave (20) dudit message de confirmation.

8. Procédé de gestion selon l'une des revendications 6 à 7, dans lequel, ledit système de gestion (1) comprenant au moins un deuxième calculateur esclave (20) relié audit premier calculateur esclave (20) et audit calculateur maître (10) par la liaison filaire bidirectionnelle (L), l'étape (E3_{A}, E3_{B}) de réception dudit message de réveil est en outre réalisée par ledit au moins un deuxième calculateur esclave (20), et l'étape (E6_{A}, E6_{B}) de réveil entraîne en outre le réveil du deuxième calculateur esclave (20).

## Patentansprüche

1. Verwaltungssystem (1) eines Multiplex-Kommunikationsnetzes (W) eines Fahrzeugs, wobei das Verwaltungssystem (1) eine Vielzahl von Rechnern (10, 20), die mit dem Kommunikationsnetz (W) verbunden sind, und eine bidirektionale Drahtverbindung (L) umfasst, die die Vielzahl von Rechnern (10, 20) miteinander verbindet, wobei das Kommunikationsnetzwerk (W) und die Mehrzahl von Computern (10, 20) einen Wachzustand und einen Standby-Zustand aufweisen, wobei die Mehrzahl von Computern (10, 20) einen Master-Computer (10) und mindestens einen Slave-Computer (20) umfasst, wobei der Master-Rechner (10) und der mindestens eine Slave-Rechner (20) so konfiguriert sind, dass sie eine Nachricht bezüglich eines angeforderten Zustands des Kommunikationsnetzes (W) über die bidirektionale Drahtverbindung (L) senden und empfangen, wobei der Zustand von mindestens einem der mehreren Rechner (10, 20) anhand der Nachricht bezüglich des angeforderten Zustands gesteuert wird, um den Zustand des Kommunikationsnetzes (W) zu steuern, wobei das Kommunikationsnetz (W) vom Typ Ethernet über Glasfaser ist, wobei der Mastercomputer (10) und der mindestens eine Slavecomputer (20) jeweils so konfiguriert sind, dass sie über das Kommunikationsnetz (W) eine Bestätigungsnachricht bezüglich des angeforderten Zustands senden und empfangen.

2. Verwaltungssystem (1) nach dem vorhergehenden Anspruch, wobei die Nachricht bezüglich des Zustands des Kommunikationsnetzes (W) einer Zustandsänderung (a0, a1) eines Signals (S1, S2, S3, S4, S5) entspricht, das von dem Master-Rechner (10) und/oder von dem mindestens einen Slave-Rechner (20) über die bidirektionale Drahtverbindung (L) gesendet wird.

3. Verwaltungssystem (1) nach dem vorhergehenden Anspruch, wobei das gesendete Signal (S1, S2, S3, S4, S5) einen hohen Zustand (a1) und einen niedrigen Zustand (a0) aufweist, wobei der hohe Zustand (a1) oder der niedrige Zustand (a0) des Signals (S1, S2, S3, S4, S5) dem wachen Zustand des Kommunikationsnetzes (W) entspricht und der andere des hohen Zustands (a1) oder des niedrigen Zustands (a0) des Signals dem Standby-Zustand des Kommunikationsnetzes (W) entspricht.

4. Verwaltungssystem (1) nach einem der vorhergehenden Ansprüche, das einen ersten Slave-Rechner (20) und mindestens einen zweiten Slave-Rechner (20) umfasst, wobei der mindestens eine zweite Slave-Rechner (20) mit dem Master-Rechner (10) und dem ersten Slave-Rechner (20) über eine bidirektionale Drahtverbindung (L) verbunden ist, mindestens entweder der Mastercomputer (10) oder der erste Slavecomputer (20) einen Schalter (30) umfasst, der so konfiguriert ist, dass er den mindestens einen zweiten Slavecomputer (20) mit dem Kommunikationsnetzwerk (W) verbindet.

5. Kraftfahrzeug mit einem Ethernet-Kommunikationsnetz (W) über Glasfaser und einem System (1) zur Verwaltung eines Zustands des Kommunikationsnetzes (W) nach einem der Ansprüche 1 bis 4.

6. Verfahren zur Verwaltung eines Multiplex-Kommunikationsnetzes (W) eines Fahrzeugs, wobei das Fahrzeug ein Verwaltungssystem (1) des Kommunikationsnetzes (W) umfasst, das einen Wachzustand und einen erwachten Zustand aufweist, wobei das Verwaltungssystem (1) einen Master-Rechner (10) und mindestens einen ersten Slave-Rechner (20) umfasst, wobei das Kommunikationsnetz (W) vom Typ Ethernet über Lichtwellenleiter ist, wobei das Verfahren eine Phase des Erwachens des Kommunikationsnetzes (W) umfasst, die umfasst:
- einen Schritt (E1A, E1B) der Aktivierung der genannten bidirektionalen Drahtverbindung (L),
- einen Schritt (E2A, E2B) des Sendens einer Nachricht zum Aufwecken des Kommunikationsnetzes (W) über die bidirektionale Drahtverbindung (L) durch den genannten Master-Rechner (10) oder den genannten ersten Slave-Rechner (20),
- einen Schritt (E3A, E3B) des Empfangens der Wecknachricht durch den anderen des Mastercomputers (10) oder des ersten Slavecomputers (20), und
- einen Schritt (E6A, E6B) des Aufweckens des Master-Rechners (10) und des ersten Slave-Rechners (20), was das Aufwecken des Kommunikationsnetzes (W) zur Folge hat,
wobei der Schritt (E2A, E2B) des Sendens einer Nachricht zum Aufwecken des Kommunikationsnetzes (W) durch den ersten Slave-Rechner (20) ausgeführt wird, wobei das Verfahren nach dem Schritt (E3A, E3B) des Empfangs der Aufwecknachricht durch den Master-Rechner (10) einen Schritt (E4B) des Sendens einer Nachricht zur Bestätigung des Aufweckens des Kommunikationsnetzes (W) über das Kommunikationsnetz (W) durch den Master-Rechner (10) an den mindestens einen ersten Slave-Rechner (20) umfasst.

7. Verwaltungsverfahren nach dem vorhergehenden Anspruch, umfassend einen Schritt (E5B) des Empfangens der Bestätigungsnachricht durch den ersten Slave-Rechner (20).

8. Verwaltungsverfahren nach einem der Ansprüche 6 bis 7, wobei das Verwaltungssystem (1) mindestens einen zweiten Slave-Rechner (20) umfasst, der mit dem ersten Slave-Rechner (20) und dem Master-Rechner (10) über die bidirektionale Drahtverbindung (L) verbunden ist, der Schritt (E3A, E3B) des Empfangens der Wecknachricht außerdem von dem mindestens einen zweiten Slave-Rechner (20) durchgeführt wird, und der Schritt (E6A, E6B) des Weckens außerdem das Wecken des zweiten Slave-Rechners (20) bewirkt.

## Claims

1. A management system (1) for a multiplexed communication network (W) of a vehicle, said management system (1) comprising a plurality of computers (10, 20) connected to said communication network (W), and a bidirectional wire link (L) connecting said plurality of computers (10, 20) with each other, said communication network (W) and said plurality of computers (10, 20) having a standby state and an awake state, said plurality of computers (10, 20) comprising a master computer (10) and at least one slave computer (20) said master computer (10) and said at least one slave computer (20) being configured to transmit and receive a message relating to a requested state of the communication network (W) via said bi-directional wire link (L), the state of at least one of the plurality of computers (10, 20) being controlled from said message relating to the requested state so as to control the state of the communication network (W), said communication network (W) being of the Ethernet over optical fibre type, wherein said master computer (10) and said at least one slave computer (20) are respectively configured to transmit and receive, via the communication network (W), a confirmation message relating to said requested state.

2. Management system (1) according to the preceding claim, wherein said message relating to said state of the communication network (W) corresponds to a change of state (a0, a1) of a signal (S1, S2, S3, S4, S5) transmitted by the master computer (10) and/or by said at least one slave computer (20) via the bidirectional wire link (L).

3. A management system (1) according to the preceding claim, wherein, said transmitted signal (S1, S2, S3, S4, S5) having a high state (a1) and a low state (a0), said high state (a1) or said low state (a0) of the signal (S1, S2, S3, S4, S5) corresponds to the awakened state of the communication network (W) and the other of said high state (a1) or said low state (a0) of the signal corresponds to the standby state of the communication network (W).

4. Management system (1) according to one of the preceding claims, comprising a first slave computer (20) and at least one second slave computer (20), said at least one second slave computer (20) being connected to the master computer (10) and to said first slave computer (20) by a bidirectional wire link (L), at least one of the master computer (10) or the first slave computer (20) comprises a switch (30) configured to connect said at least one second slave computer (20) to the communication network (W).

5. A motor vehicle comprising an Ethernet communication network (W) over optical fibre and a management system (1) of a state of said communication network (W) according to any of claims 1 to 4.

6. A method of managing a multiplexed communication network (W) of a vehicle, said vehicle comprising a management system (1) of said communication network (W) having a standby state and an awake state, said management system (1) comprising a master computer (10) and at least a first slave computer (20), said communication network (W) being of the Ethernet over optical fibre type, said method comprising a phase of waking up said communication network (W) comprising :
- a step (E1A, E1B) of activating said bidirectional wire link (L),
- a step (E2A, E2B) of sending by said master computer (10) or by said first slave computer (20) a message for waking up the communication network (W) via the bidirectional wire link (L)
- a step (E3A, E3B) of receiving by the other of said master computer (10) or said first slave computer (20) said wake-up message, and
- a step (E6A, E6B) of waking up said master computer (10) and said first slave computer (20), causing the communication network (W) to wake up,
said step (E2A, E2B) of sending a message waking up the communication network (W) being performed by the first slave computer (20), the method comprises, after the step (E3A, E3B) of the master computer (10) receiving said wake-up message, a step (E4B) of the master computer (10) sending to said at least one first slave computer (20) a message confirming the waking up of the communication network (W) via the communication network (W).

7. Management method according to the preceding claim, comprising a step (E5B) of receiving by the first slave computer (20) said confirmation message.

8. A management method according to one of claims 6 to 7, wherein, said management system (1) comprising at least a second slave computer (20) connected to said first slave computer (20) and to said master computer (10) by the bidirectional wire link (L), the step (E3A, E3B) of receiving said wake-up message is furthermore carried out by said at least one second slave computer (20), and the wake-up step (E6A, E6B) furthermore leads to the wake-up of the second slave computer (20).
